(19) Europäisches Patentamt / European Patent Office / Office européen des brevets

(11) **EP 2 419 283 B1**

(12) **FASCICULE DE BREVET EUROPEEN**

(45) Date de publication et mention
de la délivrance du brevet:
**16.07.2014 Bulletin 2014/29**

(21) Numéro de dépôt: **10713472.8**

(22) Date de dépôt: **14.04.2010**

(51) Int Cl.:
**B60C 23/04** *(2006.01)*

(86) Numéro de dépôt international:
**PCT/EP2010/054895**

(87) Numéro de publication internationale:
**WO 2010/119066 (21.10.2010 Gazette 2010/42)**

(54) **PROCEDE DE SYNCHRONISATION DE MESURES.**

SYNCHRONISIERUNGSVERFAHREN VON MESSUNGEN

SYNCHRONISING METHOD OF MEASUREMENTS

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **17.04.2009 FR 0952518**

(43) Date de publication de la demande:
**22.02.2012 Bulletin 2012/08**

(73) Titulaires:
• **COMPAGNIE GENERALE DES
ETABLISSEMENTS MICHELIN
63000 Clermont-Ferrand (FR)**
• **MICHELIN Recherche et Technique S.A.
1763 Granges-Paccot (CH)**

(72) Inventeur: **MARTIN, Denis
F-63000 Clermont-Ferrand (FR)**

(56) Documents cités:
**EP-A- 1 842 699     WO-A-2005/030498**

**Description**

L'invention concerne un procédé pour la synchronisation des mesures obtenues à partir de plusieurs moyens d'acquisition sur une période donnée de mesures liées aux contraintes supportées par un pneumatique équipant un véhicule en circulation, tel qu'un véhicule destiné à porter de lourdes charges.

Bien que non limité à ce type de véhicules, l'invention sera plus particulièrement décrite en référence à des véhicules de type « Génie Civil », par exemple des dumpers destinés à un usage minier. Il s'agit notamment de véhicules qui peuvent être amener à rouler au maximum de leur possibilité et ainsi circuler au sein d'une mine en permanence pour des raisons de productivité de la mine.

Ces véhicules comprennent habituellement un train avant directeur comportant deux roues directrices et un train arrière, le plus souvent rigide, comportant quatre roues motrices réparties deux à deux de chaque côté. Un train est défini comme un ensemble des éléments permettant de relier la structure fixe du véhicule au sol.

Dans le cas de ces véhicules, notamment destinés à des usages dans des mines ou carrières pour le transport de charges, les difficultés d'accès et les exigences de rendement conduisent les fabricants de ces véhicules à augmenter leur capacité de charge. Il s'ensuit que les véhicules sont de plus en plus grands et donc eux-mêmes de plus en plus lourds et peuvent transporter une charge de plus en plus importante. Les masses actuelles des ces véhicules peuvent atteindre plusieurs centaines de tonnes et il en est de même pour la charge à transporter ; la masse globale peut atteindre jusqu'à 600 tonnes.

La capacité de charge du véhicule étant directement liée à celle des pneumatiques, la conception des pneumatiques doit être adaptée à ces évolutions pour fournir des pneumatiques capables de supporter les contraintes d'utilisation.

Les dimensions de ces pneumatiques sont donc importantes. En conséquence les dimensions des roues sont également importantes et la raideur des zones basses des pneumatiques nécessite que lesdites roues soient réalisées en plusieurs parties pour permettre le montage du pneumatique sur une jante. Le montage et le démontage des pneumatiques qui interviennent en cas de remplacement ou d'entretien nécessitent des manipulations longues et fastidieuses. Le nombre de pièces de serrage devant être manipulées lors de ces opérations peut être supérieur à 200, auquel s'associent des couples de serrage de ces pièces très importants. Le temps de ces opérations est en conséquence long et donc nuisible à la productivité recherchée dans le travail d'exploitation de ces mines.

La demande actuelle s'orientant toujours vers une hausse de la capacité de charge de ces engins, les différents paramètres énoncés précédemment conduisent les concepteurs de pneumatiques à optimiser lesdits pneumatiques notamment en tenant compte de l'utilisation de ceux-ci.

Pour répondre à la demande des utilisateurs qui souhaitent voir encore une augmentation de la capacité de charge des engins porteurs, notamment utilisés dans les mines, il est nécessaire d'améliorer les performances des pneumatiques.

Pour cela il peut être nécessaire d'associer momentanément des moyens de mesures de caractéristiques liées aux contraintes supportées par un pneumatique équipant un véhicule en circulation ; il s'agit de caractéristiques mesurées directement sur le pneumatique et/ou de caractéristiques influençant les contraintes que le pneumatique supporte lorsque le véhicule est en circulation. Ces moyens de mesure vont permettre de suivre le vécu des pneumatiques équipant de tels véhicules et ainsi permettre aux concepteurs de pneumatiques de pouvoir mieux adapter les pneumatiques aux usages réels et répondre aux demandes des utilisateurs notamment en termes de capacité de charge transportée.

Il s'agit par exemple de moyens de mesures de pression, de température, de moyens mesurant des vitesses, des accélérations,...

La mise en place de ces moyens de mesure étant provisoire et les temps d'arrêts des véhicules nuisant à la productivité, ils sont conçus pour être facilement et rapidement mis en place ou retirés.

Pour cela, ils sont également avantageusement prévus de tailles et de poids modestes pour être facilement transportables.

Ils sont encore prévus pour fonctionner de manière autonome et donc associer chacun à une source d'énergie.

Cette source d'énergie pour limiter encore le poids est réduite au maximum du point de vue masse et encombrement et par conséquence est limitée en terme de puissance.

L'association momentanée de moyens de mesures de caractéristiques liées aux contraintes supportées par un pneumatique équipant un véhicule en circulation impose par conséquence des moyens de mesure qui d'une part ne sont pas reliés entre eux ou bien à une source d'énergie par des liaisons filaires pour simplifier le transport, la mise en place puis le démontage desdits moyens de mesure ; il faut en effet limiter les temps d'arrêt des véhicules et donc prévoir des installations et démontage les plus simples et rapides possibles. D'autre part, elle impose une absence de communication entre les moyens de mesure par des liaisons sans fils et donc par ondes, de tels techniques de communication étant fortement consommatrice d'énergie. Il est par ailleurs difficile de concevoir un système itinérant fonctionnant sur le principe d'une communication par ondes radio, sachant que ce type de moyens de communication est réglementé et que les règles et plus particulièrement les fréquences peuvent varier d'un pays à l'autre.

Dans le cas présent, le souhait d'obtenir des données relatives aux contraintes subies par le pneumatique nécessite une pluralité de moyens de mesures afin d'obtenir une information la plus complète possible. Il est encore nécessaire pour l'exploitation de ces données de pouvoir combiner l'ensemble des mesures et donc de les synchroniser.

Le document EP 1 842 699, en accord avec le préambule de la revendication 1, décrit un système comportant plusieurs capteurs reliés à une unité centrale via un dispositif de communication multiplexée numérique. Ce dispositif consiste en un système en série sur lequel sont reliés les différents transpondeurs recevant les signaux mesurés.

Le document WO 2005/030498 décrit un ensemble de plusieurs capteurs placés dans un ensemble monté, constitué d'une roue et d'un pneumatique, et liés en permanence à un système d'interrogation.

Les inventeurs se sont ainsi donnés pour mission de permettre l'exploitation de mesures obtenues par plusieurs moyens d'acquisition de mesures de caractéristiques liées aux contraintes supportées par un pneumatique équipant un véhicule en circulation, lesdits moyens de mesures n'étant pas reliés ni entre eux ni à aucun autre système et les moyens d'acquisition de mesures étant limités en termes de poids, d'encombrement et de consommation d'énergie comme expliqué précédemment.

Ce but a été atteint selon l'invention par un procédé pour la synchronisation des mesures obtenues, sur une période donnée, à partir de plusieurs moyens d'acquisition de mesures de caractéristiques liées aux contraintes supportées par un pneumatique équipant un véhicule en circulation, lesdits moyens d'acquisitions de mesures étant rendus opérationnels indépendamment les uns des autres et au moins une indexation à un instant donné des mesures de chacun desdits moyens étant créée par rapport à un moyen de référence mesurant le temps.

Selon l'invention, le moyen de référence mesurant le temps sert de référence pour créer un index sur chacun des signaux enregistrés au cours du temps par un moyen d'acquisition de mesures. Les inventeurs ont su mettre en évidence que l'utilisation d'un unique référentiel de mesure du temps combiné à la création d'un index sur chacun des signaux autorise une synchronisation des différents signaux obtenus par chacun des moyens d'acquisition de mesures. En effet, il est ainsi possible de positionner dans le temps l'obtention d'une mesure par un des moyens d'acquisition par rapport à une origine de temps propre au moyen de référence mesurant le temps. Cette opération répétée pour les différents signaux permet de les synchroniser et ainsi d'autoriser une exploitation de l'ensemble desdits signaux et de leur combinaison pour mieux définir les contraintes supportés par les pneumatiques et éventuellement expliquer ces contraintes.

Avantageusement selon l'invention, en dehors de ladite au moins une indexation à un instant donné, les moyens d'acquisitions de mesures sont continuellement indépendant les uns des autres et lesdits moyens acquièrent des mesures de manière autonome.

Selon cette réalisation avantageuse de l'invention, les moyens d'acquisitions de mesures sont totalement indépendant les uns des autres et autonomes, excepté éventuellement durant lesdites au moins une indexation à un instant donné de chacun des moyens d'acquisition. Lesdits moyens d'acquisition n'ayant pas à communiquer entre eux ou avec tout autre dispositif, leur consommation énergétique reste limitée et il n'est donc en outre pas nécessaire qu'ils soient associés ou reliés à une source énergétique importante.

Selon un premier mode de réalisation de l'invention, le moyen de référence est un des moyens de mesures.

Selon un deuxième mode de réalisation de l'invention, le moyen de référence est un moyen supplémentaire indépendant. Ce deuxième mode de réalisation peut permettre de simplifier la mise en oeuvre du procédé. En effet, un opérateur peut ainsi disposer d'un moyen de référence mesurant le temps et créer un index sur chacun des moyens d'acquisition soit par connexion directe soit en émettant un signal, lesdits moyens d'acquisition étant prévus pour recevoir cette information. Ce moyen de référence est un dispositif comportant une horloge associée à une source d'énergie capable de l'alimenter pendant la période nécessaire à l'indexation des différents moyens de mesure et comportant un système de communication prévu pour dialoguer avec les différents moyens de mesure. La communication peut se faire soit par connexion par exemple avec une prise qui autorise un échange d'informations soit par ondes, les moyens de mesure ne faisant alors qu'office de récepteur , ce qui ne nécessite que peu d'apport d'énergie. Par exemple un tel moyen de référence peut être un ordinateur ou bien un PDA (Personal digital assistant) équipé d'une liaison RS232.

Avantageusement selon l'invention, l'indexation à un instant donné des mesures de chacun desdits moyens est réalisée en décalé dans le temps par rapport aux autres moyens. L'invention prévoit en effet la possibilité de ne pas créer un index simultanément sur chacun des signaux produits par les différents moyens d'acquisition. Le procédé selon l'invention prévoit ainsi la possibilité d'indexer les moyens d'acquisition les uns après les autres ceux-ci ayant déjà commencé leurs acquisitions de mesures respectives. Chacun des signaux est ensuite synchronisé par rapport au temps mesuré par le moyen de référence jusqu'à sa propre indexation, lesdits signaux étant ensuite aisément synchronisé entre eux pour leur exploitation.

Une variante de l'invention prévoit que chacune des mesures est corrigée en tenant compte de la dérive temporelle du moyen d'acquisition concerné. Il est en effet connu que les dispositifs de mesure temporelle peuvent présenter une dérive dans le temps. De telles dérives étant variables d'un moyen d'acquisition à l'autre, dès lors que les acquisitions se font sur des durées importantes, elles peuvent perturber l'exploitation des signaux obtenus malgré la synchronisation proposée. L'invention propose ainsi de corriger les dérives de chacun des moyens d'acquisition avant d'effectuer la synchronisation selon l'invention. Pour cela, il est nécessaire de définir la dérive de chacun des moyens d'acquisition par une étude préalable et d'effectuer un traitement du signal obtenu pour éliminer l'effet du à cette dérive. La définition et la correction de la dérive temporelle sont réalisées par tous moyens connus de l'homme du métier. Par exemple, l'influence de la température est déterminée au préalable par un passage en étuve de chacun moyen de mesure et peut être modélisée par un polynôme du troisième degré.

Afin de s'affranchir des phénomènes de dérive temporelle des différents moyens d'acquisition, il est également possible de limiter la période d'acquisition des signaux à un temps suffisamment court de sorte que les différentes dérives soient négligeables. Des mesures sur une plus longue durée mais réalisées à température constante vont également permettre de s'affranchir de ces phénomènes de dérive temporelle.

Selon un mode de réalisation préféré de l'invention, il est encore possible de créer une indexation à un instant donné en début des mesures de chacun desdits moyens par rapport au moyen de référence mesurant le temps et une indexation à un instant donné à la fin des mesures de chacun desdits moyens par rapport au moyen de référence mesurant le temps. Ce mode de réalisation de l'invention va permettre d'effectuer une double synchronisation, en début et en fin d'acquisition des signaux, qui peut permettre si la période d'acquisition correspond à des phénomènes de dérive temporelle non négligeables de s'affranchir de ceux-ci, tout au moins en moyenne.

Pour des périodes d'acquisition encore plus longues, l'invention prévoit encore avantageusement de créer une indexation à un instant donné à intervalle régulier, au cours de la période donnée, des mesures de chacun desdits moyens par rapport au moyen de référence mesurant le temps. Une telle variante de réalisation de l'invention va conduire à de multiples synchronisations, le nombre de celles-ci étant défini par la durée nécessaire d'acquisition des signaux, permettant de s'affranchir des phénomènes de dérive temporelle des différents moyens d'acquisitions.

Selon d'autres modes de réalisation de l'invention, il est encore possible de combiner des indexations multiples des mesures de chacun desdits moyens par rapport au moyen de référence mesurant le temps et de corriger chacune des mesures en tenant compte de la dérive temporelle du moyen d'acquisition concerné.

Les moyens de mesure précités peuvent selon l'invention être de tout type et sont prévus pour des mesures de caractéristiques liées aux contraintes supportées par un pneumatique équipant un véhicule en circulation.

Les caractéristiques mesurées peuvent tout d'abord être celles liées directement au pneumatique telles sa pression ou sa température. Il s'agit encore de caractéristiques directement liées au véhicule telles que par exemple, la charge, la distance parcourue, la direction suivie, l'inclinaison du véhicule soit sous forme de tangage soit sous forme de roulis, ..., qui ont ou peuvent influencer les contraintes que subissent les pneumatiques équipant le véhicule.

Il peut encore s'agir de caractéristiques liées à son environnement telles que la température, la nature du sol, ... qui peuvent varier au cours de l'utilisation des pneumatiques et qui ont une influence sur le comportement d'un pneumatique.

En effet de telles caractéristiques d'utilisation qui sont liées soit aux conditions d'utilisation soit au mode d'utilisation ont une influence directe sur les contraintes subis par un pneumatique donné du véhicule.

La pente de la voie ou piste suivie par le véhicule va notamment modifier la répartition des charges par pneumatique. Un véhicule roulant dans le sens de la descente entraîne par exemple un report de charges sur le train avant alors que le même véhicule roulant dans le sens de la montée entraîne un report de charge sur le train arrière du véhicule.

De la même façon, un parcours sinueux entraîne des répartitions de charges variant entre la gauche et la droite du véhicule selon le sens des courbes empruntées par le véhicule. Des virages à droite ou à gauche modifient effectivement les répartitions de charge entre les pneumatiques.

Certains paramètres d'environnement qui peuvent être considérés comme les conditions d'utilisation du véhicule et donc des pneumatiques peuvent modifier les contraintes supportées par lesdits pneumatiques.

La température par exemple agit sur le comportement du pneumatique et donc sur ses réactions vis-à-vis des contraintes qui lui sont imposées. La nature du sol, qu'il s'agisse par exemple d'un terrain caillouteux ou bien d'un terrain sablonneux ou argileux, intervient directement sur les contraintes du pneumatique.

Les moyens de mesures sont par exemples des capteurs de pression directement associés aux pneumatiques ou bien liés aux systèmes de suspension du véhicule, des capteurs de température, des moyens mesurant des vitesses, des accélérations, des dispositifs de type GPS, ...

Chacun des moyens de mesure est, selon l'invention, d'une part associé à une source d'énergie pour assurer son fonctionnement et d'autre part à des éléments de mémoire pour stocker les mesures acquises durant la période de mesures.

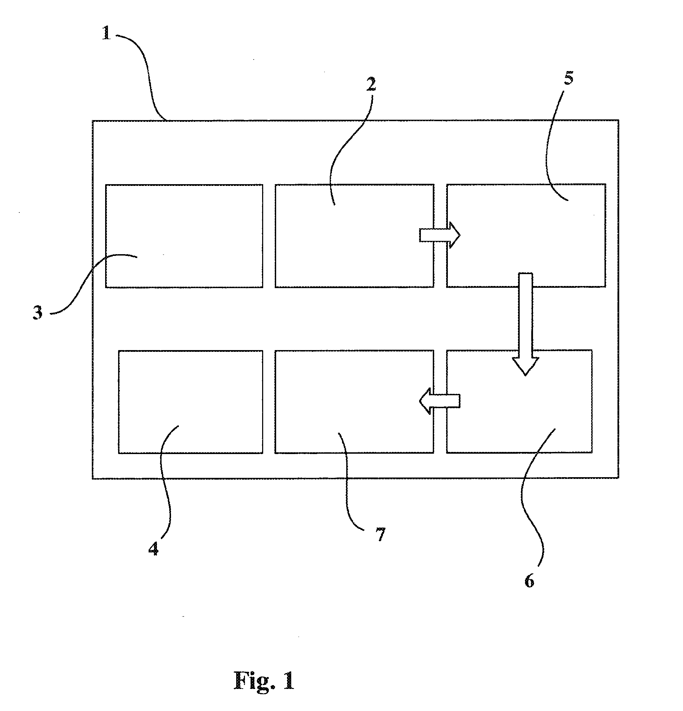

D'autres détails et caractéristiques avantageux de l'invention ressortiront ci-après de la description d'exemples de réalisation de l'invention en référence aux figures 1 à 3 qui représentent :

**[0043]** - figure 1, une représentation schématique d'un moyen d'acquisition de mesures pour la mise en oeuvre de l'invention,

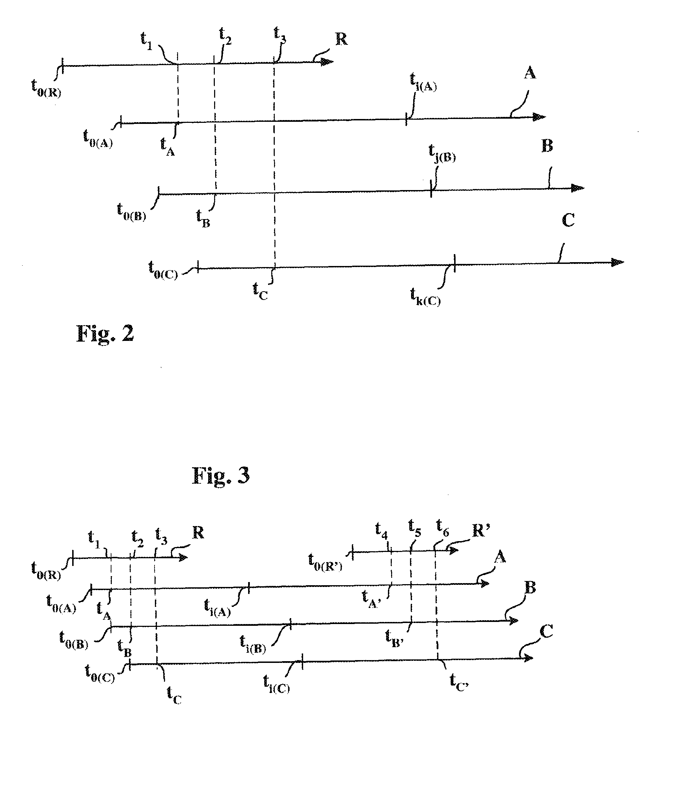

**[0044]** - figure 2, une représentation schématique d'un premier mode de réalisation de l'invention pour synchroniser des mesures,

**[0045]** - figure 3, une représentation schématique d'un deuxième mode de réalisation de l'invention pour synchroniser des mesures.

Les exemples décrits ci-après ont consistés à effectuer des mesures sur un véhicule de type dumper, équipé de six pneumatiques de type 59/80R63, circulant sur les pistes d'une mine à ciel ouvert.

Les différents moyens d'acquisition de mesures utilisés ont été les suivants :

- Six capteurs de pression à pont de jauge, chacun associé à un pneumatique équipant le véhicule pour mesurer la pression de chacun des pneumatiques ; ce type de capteur autorise des mesures de 0 à 10 bars.

- quatre capteurs de pression à pont de jauge pour mesurer les pressions de suspension ; ce type de capteur autorise des mesures de 0 à 300 bars.

- Quatre télémètres à ultrason associés au châssis, pour mesurer la distance entre châssis et sol; ce type de capteur autorise des mesures de 0 à 3 mètres.

- Deux accéléromètres MEMS (Micro Electro-Mechanical Systems) pour mesurer des accélérations latérales et longitudinales.

La figure 1 illustre schématiquement le dispositif ou module 1 fixé sur le pneumatique ou le véhicule incorporant l'un de ces capteurs 2. Sur ce module 1, le capteur 2 est tout d'abord associé à une pile 3 assurant son autonomie et une horloge 4. Les mesures obtenues par le capteur passent par une cellule 5 de conditionnement qui assure l'amplification et un filtrage du signal correspondant à la mesure pour être enregistré par un microprocesseur 6 dans une unité de mémoire 7 assurant le stockage des mesurées ainsi traitées.

L'ensemble de ces capteurs et modules présentent tout d'abord l'avantage de constitué un volume limité autorisant leur transport de façon simple, par exemple dans une valise pouvant être facilement transporté par avion et acheminée sur un site telle qu'une mine.

Cet avantage est considérable dans la mesure où il s'agit d'un dispositif mobile qui doit pouvoir être transporté d'un site à un autre et rapporté pour analyse des résultats.

Ensuite, l'ensemble de ces capteurs a pu être installé sur le véhicule en un temps relativement court, de l'ordre de 1 heure. Un tel temps permet de limiter au mieux le temps d'arrêt du véhicule.

Après avoir été installé sur le véhicule, chacun des capteurs est mis en fonction manuellement et commence un enregistrement des mesures.

Le dispositif comporte un élément complémentaire équipé d'une horloge qui va être utilisé pour indexer les mesures de chacun des capteurs. Cet élément complémentaire est un simple ordinateur qui vient créer un index sur les mesures de chacun des capteurs par connexion RS232.

La figure 2 illustre schématiquement la synchronisation des mesures de trois capteurs lors du début des mesures. L'élément complémentaire représenté par l'échelle de temps R mesure le temps et est utilisé pour créer des indexations sur les mesures de trois capteurs illustrées par les échelles de temps A, B, C. Sur chacune de ces échelles apparaît un point de départ correspondant à la mise en route des capteurs et donc au début de l'acquisition des mesures par chacun d'entre eux. Ces points de départ sont indiqués par les temps $t_{0(A)}$, $t_0(_B)$ et $t_{0(C)}$ correspondant respectivement à chacune des échelles de temps A, B, C.

Après la mise en route des capteurs des indexations sont créées à partir de l'élément complémentaire. Ces indexations sont illustrées sur les échelles de temps A, B, C par les temps $t_A$, $t_B$, $t_C$ mesurés par sur les échelles de temps A, B, C respectives de chacun des capteurs et correspondant respectivement aux temps $t_1$, $t_2$, $t_3$ mesuré sur l'échelle de temps R.

Un temps $t_{i(A)}$ mesuré sur l'échelle de temps A et correspondant au signal de mesure du capteur A pourra alors être corrigé en vue de la synchronisation de la mesure du capteur A avec celles des autres capteurs de la façon suivante :

$$t_{i(A)\ corrigé} = t_{i(A)} - t_A + t_1$$

De la même façon, on aura :

$$T_{i(B)\ corrigé} = t_{i(B)} - t_B + t_2,$$

et

$$T_{i(C) \text{ corrigé}} = t_{i(C)} - t_C + t_3$$

Comme expliqué précédemment, lorsque les mesures sont effectuées sur une durée telle que les dérives temporelles des capteurs deviennent non négligeables, la valeur corrigé peut intégré un facteur de dérive $d_x$ défini au préalable pour chacun des capteurs.

Les valeurs corrigées s'expriment alors de la façon suivante :

$$t_{i(x) \text{ corrigé}} = (t_{i(x)} - t_x).d_{x} + t_u$$

avec u variant de 1 à 3.

Il est encore possible de s'affranchir des phénomènes de dérive temporelle des capteurs en créant des indexations périodiques sur chacune des mesures des capteurs et de corriger les valeurs en fonction de ces différentes indexations.

La figure 3 illustre schématiquement une deuxième indexation des différentes échelles de temps.

Une première possibilité d'utilisation d'une deuxième ou d'une $n^{ième}$ indexation est d'effectuer le même calcul qu'exposé précédemment en considérant qu'entre chaque indexation, la dérive temporelle est négligeable. Les valeurs corrigées peuvent alors par exemple s'exprimer sous la forme :

$$T_{j(x) \text{ corrigé}} = t_{j(x)} - t_x + t_v,$$

avec v variant de 4 à 6 par exemple sur la figure 3.

De la même façon, il est encore possible de tenir compte de la dérive temporelle et la formule s'écrit :

$$T_{j(x) \text{ corrigé}} = (t_{j(x)} - t_x).d_x + t_v,$$

Une autre possibilité, dans le cas de la figure 3, est d'utiliser deux indexations successives pour déterminer un facteur de dérive temporelle d'un capteur par rapport à l'autre en prenant l'un des capteurs comme référence ou plus exactement son échelle de temps. La détermination d'un tel facteur va permettre de réduire de moitié l'erreur de synchronisation due à la dérive temporelle des capteurs.

Dans le cas où nous choisissons le capteur A comme référence, nous obtenons alors des valeurs corrigées qui s'expriment de la façon suivante :

$$t_{i(A) \text{ corrigé}} = t_{i(A)} - t_A + t_1,$$

$$T_{i(B) \text{ corrigé}} = [(t_{A'}-t_4+t_5)-(t_A-t_1+t_2)] / (t_{B'}-t_B) \times (t_{i(B)} - t_B) + t_2,$$

et

$$T_{i(C) \text{ corrigé}} = [(t_{A'}-t_4+t_6)-(t_A-t_1+t_3)] / (t_{C'}-t_C) \times (t_{i(C)} - t_C) + t_3$$

Les deux formules $[(t_{A'}-t_4+t_5)-(t_A-t_1+t_2)] / (t_{B'}-t_B)$ et $[(t_{A'}-t_4+t_6)-(t_A-t_1+t_3)] / (t_{C'}-t_C)$ sont respectivement les facteurs de dérive temporelle des capteurs correspondant aux échelles de temps B et C par rapport au capteur correspondant à l'échelle de temps A.

L'un des capteurs a été pris comme référence mais il est encore possible d'utiliser une référence abstraite telle que par exemple une référence correspondant à la moyenne de l'ensemble des capteurs.

Selon ce dernier mode de synchronisation, il est encore possible de tenir compte des dérives temporelles de chacun des capteurs en déterminant celles-ci au préalable et de les inclure dans les formules de corrections des différentes valeurs.

L'invention propose ainsi encore comme expliqué précédemment de combiner les effets de plusieurs indexations et la prise en compte des dérives temporelles de chacun des capteurs pour la correction des valeurs mesurées afin d'effectuer la synchronisation des différentes mesures.

Deux types de mesures ont été effectués. Le premier a consisté à effectuer une acquisition sur une période de l'ordre d'une heure, période pendant laquelle les phénomènes de dérive temporelle des capteurs sont négligeables quant à l'interprétation que l'on souhaite faire des mesures. La synchronisation entre les différentes mesures a été faites par la seule indexation des mesures en début de période qui permet une correction des valeurs comme expliqué précédemment. Un tel type de mesure présente un intérêt pour certains cas car il va correspondre à un cycle de l'usage répétitif du véhicule. Il permet de donner des indications sur certains paramètres d'utilisation.

Le deuxième a consisté à effectuer une acquisition sur une période de l'ordre d'une vingtaine d'heure, période pendant laquelle les phénomènes de dérive temporelle des capteurs ne peuvent plus être négligés. La synchronisation des différentes mesure a alors été faites par la combinaison de plusieurs indexations des mesures et plus précisément toutes les huit heures associées à la prise en compte des facteurs de dérive temporelle de chacun des capteurs. Ce type de mesure donne une vision plus importante des contraintes subies par le pneumatique lors de l'utilisation du véhicule, l'ensemble des paramètres pouvant influencer le vécu des pneumatiques étant alors rencontrés ; sont notamment alors pris en compte des facteurs tels que des changements de chauffeur, des changements de conduite entre le jour et la nuit, ...

## Revendications

1. Procédé pour la synchronisation des mesures obtenues, sur une période donnée, à partir de plusieurs moyens d'acquisition de mesures de caractéristiques liées aux contraintes supportées par un pneumatique équipant **un véhicule en** circulation, **caractérisé en ce que** les moyens d'acquisitions de mesures sont rendus opérationnels indépendamment les uns des autres, **en ce qu'**on crée au moins une indexation à un instant donné des mesures de chacun desdits moyens par rapport à un moyen de référence mesurant le temps, et **en ce que,** en dehors de ladite au moins une indexation à un instant donné, les moyens d'acquisitions de mesures sont continuellement indépendant les uns des autres et lesdits moyens acquièrent des mesures de manière autonome.

2. Procédé selon la revendication 1, **caractérisé en ce que** le moyen de référence est un des moyens de mesures.

3. Procédé selon la revendication **1, caractérisé en ce que** le moyen de référence est un moyen supplémentaire indépendant.

4. Procédé selon l'une des revendications 1 à 3, **caractérisé en ce que** l'indexation à un instant donné des mesures de chacun desdits moyens est réalisée en décalé dans le temps par rapport aux autres moyens.

5. Procédé selon l'une des revendications 1 à 4, **caractérisé en ce que** chacune des mesures est corrigée en tenant compte de la dérive temporelle du moyen d'acquisition concerné.

6. Procédé selon l'une des revendications précédentes, **caractérisé en ce qu'**on crée une indexation à un instant donné en début des mesures de chacun desdits moyens par rapport au moyen de référence mesurant le temps et une indexation à un instant donné à la fin des mesures de chacun desdits moyens par rapport au moyen de référence mesurant le temps.

7. Procédé selon l'une des revendications précédentes, **caractérisé en ce qu'on** crée une indexation à un instant donné à intervalle régulier, au cours de la période donnée, des mesures de chacun desdits moyens par rapport au moyen de référence mesurant le temps.

8. Procédé selon l'une des revendications précédentes, **caractérisé en ce que** chaque moyen d'acquisition de mesures est associé à une horloge, à des éléments de mémoire et à une source d'énergie.

**Patentansprüche**

1.  Synchronisierungsverfahren der erzielten Messungen über eine gegebene Zeitspanne ausgehend von mehreren Messungserfassungsmitteln von Merkmalen, die mit den Belastungen zusammenhängen, die ein Reifen während des Fahrens eines Fahrzeugs erträgt, **dadurch gekennzeichnet, dass** die Messungserfassungsmittel unabhängig voneinander betriebsfähig gemacht werden, dass man mindestens eine Indexierung in einem gegebenen Augenblick der Messungen jedes der Mittel in Bezug auf ein Bezugsmittel, das die Zeit misst, schafft, und dass außerhalb der mindestens einen Indexierung in einem gegebenen Augenblick die Messungserfassungsmittel ständig voneinander unabhängig sind und die Mittel Messungen autonom erfassen.

2.  Verfahren nach Anspruch 1, **dadurch gekennzeichnet, dass** das Bezugsmittel eines der Messmittel ist.

3.  Verfahren nach Anspruch 1, **dadurch gekennzeichnet, dass** das Bezugsmittel ein unabhängiges zusätzliches Mittel ist.

4.  Verfahren nach einem der Ansprüche 1 bis 3, **dadurch gekennzeichnet, dass** die Indexierung in einem gegebenen Augenblick der Messungen jedes der Mittel zeitlich in Bezug aufeinander versetzt ausgeführt wird.

5.  Verfahren nach einem der Ansprüche 1 bis 4, **dadurch gekennzeichnet, dass** jede der Messungen korrigiert wird, indem die zeitliche Drift des betreffenden Erfassungsmittels berücksichtigt wird.

6.  Verfahren nach einem der vorhergehenden Ansprüche, **dadurch gekennzeichnet, dass** man eine Indexierung in einem gegebenen Augenblick zu Beginn der Messungen jedes der Mittel in Bezug auf das Bezugsmittel schafft, das die Zeit misst, und eine Indexierung in einem gegebenen Augenblick an dem Ende der Messungen jedes der Mittel in Bezug auf das Bezugsmittel, das die Zeit misst.

7.  Verfahren nach einem der vorhergehenden Ansprüche, **dadurch gekennzeichnet, dass** man eine Indexierung in einem gegebenen Augenblick in einem regelmäßigen Abstand im Laufe der gegebenen Zeitspanne der Messungen jedes der Mittel in Bezug auf das Bezugsmittel, das die Zeit misst, schafft.

8.  Verfahren nach einem der vorhergehenden Ansprüche, **dadurch gekennzeichnet, dass** jedes Messungserfassungsmittel mit einem Taktgeber, Speicherelementen und einer Energiequelle verbunden ist.

**Claims**

1.  Method for synchronizing the measurements obtained, over a given period, from a number of measurement acquisition means for acquiring measurements of characteristics associated with the stresses withstood by a tyre fitted on a running vehicle, **characterized in that** the measurement acquisition means are brought into operation independently of one another and **in that** at least one indexing at a given instant of the measurements from each of said means is created relative to a time-measuring reference means, and **in that,** outside of said at least one indexing at a given instant, the measurement acquisition means are continually independent of one another and said means acquire measurements autonomously.

2.  Method according to Claim 1, **characterized in that** the reference means is one of the measurement means.

3.  Method according to Claim 1, **characterized in that** the reference means is an independent additional means.

4.  Method according to one of Claims 1 to 3, **characterized in that** the indexing at a given instant of the measurements from each of said means is done with a time offset relative to the other means.

5.  Method according to one of Claims 1 to 4, **characterized in that** each of the measurements is corrected by taking into account the temporal drift of the acquisition means concerned.

6.  Method according to one of the preceding claims, **characterized in that** an indexing at a given instant at the start of the measurements of each of said means is created relative to the time-measuring reference means and an indexing at a given instant at the end of the measurements of each of said means is created relative to the time-measuring reference means.

7. Method according to one of the preceding claims, **characterized in that** an indexing at a given instant at regular intervals, during the given period, of the measurements of each of said means is created relative to the time-measuring reference means.

8. Method according to one of the preceding claims, **characterized in that** each measurement acquisition means is associated with a clock, with memory elements and with an energy source.

**Fig. 1**

**Fig. 2**

**Fig. 3**

**RÉFÉRENCES CITÉES DANS LA DESCRIPTION**

**Documents brevets cités dans la description**

- EP 1842699 A
- WO 2005030498 A